(19) Europäisches Patentamt
European Patent Office
Office européen des brevets

(11)  EP 3 944 140 A1

(12)  EUROPEAN PATENT APPLICATION

(43) Date of publication:
26.01.2022  Bulletin 2022/04

(51) International Patent Classification (IPC):
G06K 9/00 (2022.01)

(21) Application number: 21186829.4

(22) Date of filing: 20.07.2021

(52) Cooperative Patent Classification (CPC):
G06K 9/00791

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:  20.07.2020  FR 2007594
20.07.2020  FR 2007601

(71) Applicant: Valeo Vision
93012 Bobigny Cedex (FR)

(72) Inventors:
• KANJ, Ali
93012 Bobigny - Cedex (FR)
• ALMEHIO, Yasser
93012 Bobigny - Cedex (FR)

(74) Representative: Valeo Visibility
Service Propriété Industrielle
c/o Valeo Vision
34, rue Saint André
93012 Bobigny (FR)

(54)  **METHOD FOR OPERATING AN AUTOMOTIVE LIGHTING DEVICE AND AUTOMOTIVE LIGHTING DEVICE**

(57)  This invention provides a method for operating an automotive lighting device (1) comprising a plurality of solid-state light sources (2). This method comprises projecting a preliminary light pattern, estimating a plurality of lighting conditions using the external data, wherein at least one of the lighting conditions depends on the distance of the nearest vehicles to the automotive lighting device. Then, a control unit calculates a new light pattern depending on the lighting conditions, wherein in the new light patterns, some rows or columns of active light pixels are turned off. Finally, this new light pattern is projected.

[Fig. 1]

## Description

This invention is related to the field of automotive lighting devices, and more particularly, to the temperature control of these light sources comprised in these devices.

Digital lighting devices are being increasingly adopted by car makers for middle and high market products.

These digital lighting devices usually comprise solid-state light sources, the operation of which heavily depends on temperature.

Temperature control in these elements is a very sensitive aspect, and is usually carried out by derating, which means decreasing the current value which feeds the light source so that the output flux and the operation temperature decreases accordingly. This causes that the performance of the light sources must be heavily oversized to face these overheating problems, so that the operation values may be decreased while still maintaining acceptable values.

This question is even more important in new electric vehicles, where energy saving is crucial, since it has a direct impact on the operation range of the vehicle.

This problem has been assumed until now, but a solution therefor is sought.

The invention provides an alternative solution for saving energy in the light sources of an automotive lighting device by a method for operating an automotive lighting device according to the invention. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for operating an automotive lighting device comprising a matrix arrangement with columns and rows of light pixels, the method comprising the steps of:

- providing the lighting device projecting a preliminary light pattern wherein each light pixel provides a preliminary luminous intensity;

- providing a plurality of sensors, configured to provide some device data and some external data;

- estimating a plurality of lighting conditions using the device data and/or the external data; and

- calculating, by means of a control unit, a new light pattern depending on the lighting conditions;

- projecting the new light pattern.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

This method is aimed to the saving of the energy demanded by lighting devices, which has an impact of the health of the lighting device and on the energy management of electric vehicles. The active pixels are turned off when its light is not needed, so that no unnecessary light is emitted by the lighting devices. In demanding scenarios, such as low visibility conditions, this saving may be significant and produce an extension of range in electric vehicles.

In some particular embodiments, at least one of the lighting conditions depends on the distance of the nearest vehicles to the automotive lighting device and wherein in the new light pattern, some rows or columns are turned off with respect to the preliminary luminous intensity.

In some particular embodiments, the step of calculating the new light pattern and the step of projecting the new light pattern are performed periodically with a period lower than 1 second, and particularly lower than 0.5 seconds.

This feature involves a quick adaptation to changes in the environmental conditions of the vehicle.

In some particular embodiments, the control unit is configured to estimate the external lighting device temperature by means of:

- training the control unit to estimate preliminary lighting conditions with a training dataset; and

- testing the control unit comparing the new light pattern obtained with expected results.

This way of training the control unit is useful since provides the control unit with the ability to provide the lighting conditions in an improved way.

In some particular embodiments, the step of training the control unit comprises the use of a machine learning algorithm.

This machine learning algorithm uses the sensor data as training data to estimate the lighting conditions. The resulting light pattern is tested to check that they fulfil the expected requirements. Once the results are validated, the values of the control unit are used to calculate the rows or columns that should be put off to generate the new light pattern.

In some particular embodiments, the lighting conditions are at least two of active lighting functionality, outside luminous intensity, numbers of cars around and distance with respect to them, current vehicle speed or presence of traffic lights.

All of these lighting conditions will influence in the number and position of rows/columns to be switched off, depending on the involved luminous demand.

In some particular embodiments, the plurality of sensors comprise at least two of an external light sensor, a lighting functionality activation sensor, cameras, radar, lidar or infrared sensors.

These are examples of data which may be used by the machine learning algorithm to provide the new light pattern.

In some particular embodiments, the new light pattern is such that no light is projected over any object surrounding the lighting device.

This particular case takes into account that some scenarios may provide a plurality of vehicles surrounding the automotive lighting device, so there is no need to project light over any of them.

In some particular cases, the new light pattern is chosen from a plurality of preinstalled light patterns.

This preinstalled light patterns may also be produced by the machine learning algorithm of the control unit, and may be specific for each user.

In some particular embodiments, the step of calculating the new light pattern comprises the steps of

- calculating an intensity operation coefficient comprised between 0 and 1 by a formula;

$$IOC = \sum_{i} c_i \cdot w_i$$

- wherein ci refers to the lighting conditions and wi refers to the weight of the corresponding condition, wherein at least two different lighting conditions have different weightsand wherein the step of projecting the new light pattern comprises multiplying the preliminary luminous intensity of each light source by the intensity operation coefficient

In some particular embodiments, the control unit is configured to estimate the external lighting device temperature by means of:

- training the control unit to estimate preliminary lighting conditions with a training dataset; and

- testing the control unit comparing the intensity operation coefficient obtained with the preliminary lighting conditions with automotive operation data.

This way of training the control unit is useful since provides the control unit with the ability to provide the lighting conditions in an improved way.

In some particular embodiments, the step of training the control unit comprises the use of a machine learning algorithm.

This machine learning algorithm uses the sensor data as training data to estimate the lighting conditions. The resulting intensity operation coefficients are tested to check that they fulfil the minimum requirements. Once the results are validated, the values of the control unit are used to calculate the intensity operation coefficient.

In some particular embodiments, the lighting conditions are at least two of active lighting functionality, the route profile, outside luminous intensity, numbers of cars around and distance with respect to them, current vehicle speed, lighting device temperature, presence of traffic lights, external temperature, location inside a tunnel.

All of these lighting conditions are values comprised between 0 and 1, depending on the involved luminous demand.

In some particular embodiments, the plurality of sensors comprise at least three of a vehicle speed sensor, an ambient temperature sensor, an ambient humidity sensor, an external light sensor, an air speed sensor, a thermistor, a lighting functionality activation sensor, a light source temperature, radar, lidar or infrared sensors, geopositioning sensors or cameras.

These are examples of data which may be used by the machine learning algorithm to provide the optimal value of the intensity operation coefficient.

In some particular embodiments, the device data further comprises physical data of the automotive lighting device, such as the volume of the lighting device or a distance between two points of the lighting device.

The invention not only uses data obtained by sensors, but may also take into account physical properties of the lighting device itself.

In some particular embodiments, the weights of each lighting condition is provided by predetermined operation modes.

In a further inventive aspect, the invention provides a data processing element comprising means for carrying out the steps of a method according to the first inventive aspect and a computer program comprising instructions which, when the program is executed by a control unit, cause the control unit to carry out the steps of a method according to the first inventive aspect.

In a further inventive aspect, the invention provides an automotive lighting device comprising:

- a matrix arrangement of solid-state light sources;

- a plurality of sensors configured to provide some external data; and

- a control unit for performing the steps of the method according to the first inventive aspect.

This lighting device provides the advantageous functionality of efficiently managing the energy consumed by the light sources, by means of an accurate new light pattern provided by the control unit.

In some particular embodiments, the matrix arrangement comprises at least 2000 solid-state light sources.

A matrix arrangement is a typical example for this method. The rows may be grouped in projecting distance ranges and each column of each group represent an angle interval. This angle value depends on the resolution of the matrix arrangement, which is typically comprised between 0.01° per column and 0.5° per column. As a consequence, many light sources may be managed at the same time.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

[Fig. 1] shows a general perspective view of an automotive lighting device according to the invention.

[Fig. 2a] and [Fig. 2b] show the effect of two different light patterns involved in a method according to the invention.

In these figures, the following reference numbers have been used:

1 Headlamp

2 LED

3 Control unit

4 Sensors

5 Original light pattern

6 New light pattern

100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

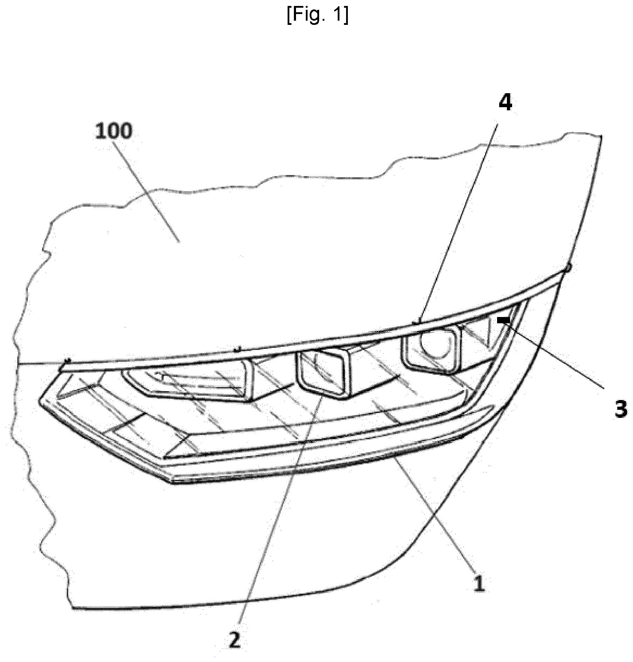

Figure 1 shows a general perspective view of an automotive lighting device according to the invention.

This headlamp 1 is installed in an automotive vehicle 100 and comprises

- a matrix arrangement of LEDs 2, intended to provide a light pattern;

- a control unit 3 to perform a control of the operation of the LEDs 2; and

- a plurality of sensors 4 intended to provide some external data.

This matrix configuration is a high-resolution module, having a resolution greater than 2000 pixels. However, no restriction is attached to the technology used for producing the projection modules.

The control unit, previously to its installation in the automotive headlamp, has undergone a training process.

This training process comprises some machine learning steps, where the control unit is trained with training data provided by the plurality of sensors. These training data are used to generate new light patterns.

The algorithm transforms the data into lighting conditions, which depend, amongst others, on the distance of the nearest vehicles to the automotive lighting device.

This lighting condition is calculated with the data provided by cameras, radar and lidar sensors, etc. The distance and location of the nearby vehicles to the automotive vehicle of the invention will define the number and position of rows and columns of the light pattern to be put off.

The light patterns provided by this control unit are verified, to check if they fulfil the lighting requirements and also represent the minimum power consumption provided the circumstances. When this training is finished, the control unit is capable of estimating the new light pattern providing the minimum power consumption, but which adapts to the surrounding conditions with the lowest error possible.

Once this training process is finished, the control unit is installed in an automotive vehicle 100 of Figure 1, to perform the luminous control of the headlamp 1.

The operation of this lighting device would be as follows: a preliminary light pattern is provided by the lighting device, according to the lighting functionality selected by the vehicle user.

Also, the vehicle user has selected one of the lighting modes (Eco, Performance, Safety...).

Each 0.2 seconds, the control unit of the lighting device receives the data from the plurality of sensors. These data include external data of the vehicle (active lighting functionality, outside luminous intensity, numbers of cars around and distance with respect to them, current vehicle speed or presence of traffic lights, etc). Due to its training, the control unit will generate a plurality of lighting conditions from these values.

With these lighting conditions values, the control unit will calculate the new light pattern, which provides an adequate lighting at the minimum power consumption.

This process is repeated each 0.2 seconds.

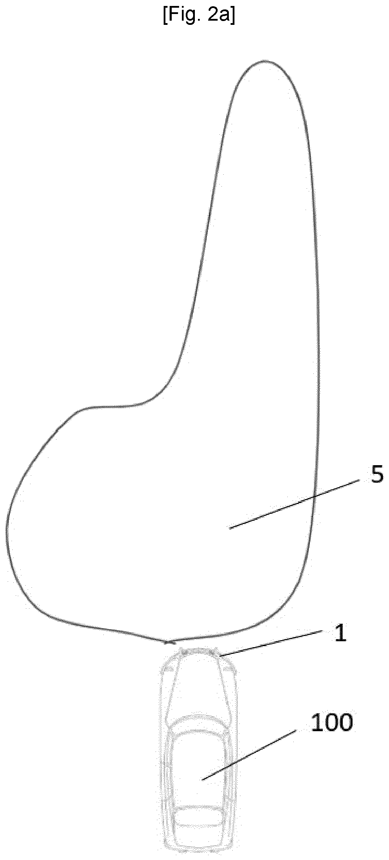

Figure 2a shows an example of a first light pattern 5 projected by a lighting device according to the invention. This light pattern corresponds to a high beam pattern, which is adequate to the environment conditions, since no other vehicle surrounds the lighting device.

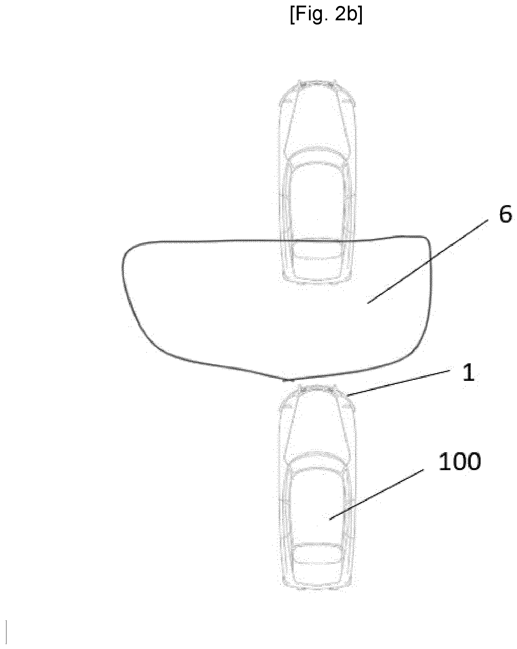

Figure 2b shows an example of a different environmental conditions. Since the vehicle 100 is approaching a traffic jam, and there is another vehicle in front of it, such light patter is unnecessary. The control unit detects a vehicle in front of the lighting device, located just 1 or 2 m in front of it. Hence, due to its training, the control unit considers that the lateral light columns are not necessary, and that the upper rows are not necessary either. The resulting new light pattern 6 is enough to fulfil the lighting requirements in the particular circumstances of a traffic jam at the minimum power consumption possible.

In different embodiments, the control unit, previously to its installation in the automotive headlamp, has undergone a different training process.

This training process comprises some machine learning steps, where the control unit is trained with training data provided by the plurality of sensors and from the physical properties of the lighting device itself. These training data are used to generate intensity operation coefficient values. Among these training data values, the sensors include a vehicle speed sensor, an ambient temperature sensor, an ambient humidity sensor, an external light sensor, an air speed sensor, a lighting functionality activation sensor or a light source thermistor. Further, the algorithm is also fed with physical data of the lighting device, such as the volume of the headlamp or internal headlamp dimensions.

The algorithm transforms the device data and the external data into lighting conditions, which are numbers between 0 and 1 which reflect the impact of the retrieved data in particular aspects of the vehicle operation.

For example, one lighting condition may be the outside luminous intensity. In a very dark night, this lighting condition would be equal to 1, and in a totally bright day, this lighting condition would be equal to 0. Thus, in a dark night, this luminous condition will contribute (according to its weight) to a higher intensity operation coefficient (and hence, in a higher luminous intensity), while in a bright day, this luminous condition will contribute to a lower intensity operation coefficient (and hence, in a lower luminous intensity).

Another lighting condition may be the numbers of cars around and distance with respect to them. This lighting condition is calculated with the data provided by cameras, radar and lidar sensors, etc. If there are a lot of cars very close to the vehicle, this lighting condition will be close to 0. However, if there are no cars surrounding the vehicle, this value will be close to 1.

Further from the lighting conditions, the weights also play an important role in the final value of the intensity operation coefficient.

The weights may be modified by different operation modes. For example, a first mode would be "Safety". In this case, the weight of external luminosity could be increased and the weight of presence of traffic lights could be decreased. Another mode could be "Eco". In this case, all the weights could be decreased in a 5%, for example. Another mode could be "Performance" (when the electric battery of the vehicle is full enough, for example), and all the weights could be increased in a 10%, for example.

Estimated values are tested with real optimal values of the intensity operation coefficient. When this training is finished, the control unit is capable of estimating the optimal intensity operation coefficient with the lowest error possible.

Once this training process is finished, the control unit is installed in an automotive vehicle 100 of Figure 1, to perform the luminous control of the headlamp 1.

The operation of this lighting device would be as follows: a preliminary light pattern is provided by the lighting device, according to the lighting functionality selected by the vehicle user.

Also, the vehicle user has selected one of the lighting modes (Eco, Performance, Safety...).

Each 0.2 seconds, the control unit of the lighting device receives the data from the plurality of sensors. These data include both external data of the vehicle (vehicle speed, external temperature, presence of surrounding vehicles, traffic lights, etc) and also data from the lighting device (internal temperature, lighting functionality...). Due to its training, the control unit will generate a plurality of lighting conditions from these values. The mode selected by the users will also tune the different weights of each lighting conditions.

With these lighting conditions values and the weight values, the control unit will calculate the intensity operation coefficient, and will multiply the luminous intensity of each matrix pixel by this intensity operation coefficient, thus obtaining the optimal light pattern. This optimal light pattern will save energy and decrease the lighting device temperature, thus reducing the $CO_2$ emission.

**Claims**

1. Method for operating an automotive lighting device (1) comprising a matrix arrangement with columns and rows of light pixels (2), the method comprising the steps of:

   o providing the lighting device projecting a preliminary light pattern (5) wherein each light pixel provides a preliminary luminous intensity;
   o providing a plurality of sensors (4), configured to provide some device data and some external data;
   o estimating a plurality of lighting conditions using the device data and/or the external data,; and
   o calculating, by means of a control unit (3), a new light pattern (6) depending on the lighting conditions,;
   o projecting the new light pattern (6).

2. Method according to claim 1, wherein at least one of the lighting conditions depends on the distance of the nearest vehicles to the automotive lighting device and wherein in the new light pattern, some rows or columns are turned off with respect to the preliminary luminous intensity.

3. Method according to any of the preceding claims, wherein the step of calculating the new light pattern and the step of projecting the new light pattern are performed periodically with a period lower than 1 second, and particularly lower than 0.5 seconds.

4. Method according to any of the preceding claims, wherein the control unit is configured to estimate the plurality of lighting conditions by means of:

   o training the control unit (3) to estimate preliminary lighting conditions with a training dataset; and
   o testing the control unit (3) comparing the new light pattern obtained with expected results.

5. Method according to claim 4, wherein the step of training the control unit comprises the use of a machine learning algorithm.

6. Method according to any of the preceding claims, wherein the lighting conditions are at least two of active lighting functionality, outside luminous intensity, numbers of cars around and distance with respect to them, current vehicle speed or presence of traffic lights.

7. Method according to any of the preceding claims, wherein the plurality of sensors comprises at least two of an external light sensor, a lighting functionality activation sensor, cameras, radar, lidar or infrared sensors.

8. Method according to any of the preceding claims, wherein the new light pattern is such that no light is projected over any object surrounding the lighting device.

9. Method according to any of the preceding claims, wherein the new light pattern is chosen from a plurality of preinstalled light patterns.

10. Method according to claim 1, wherein the step of calculating the new light pattern comprises the steps of

    o calculating an intensity operation coefficient comprised between 0 and 1 by a formula;

$$IOC = \sum_i c_i \cdot w_i$$

    o wherein ci refers to the lighting conditions and wi refers to the weight of the corresponding condition, wherein at least two different lighting conditions have different weightsand wherein the step of projecting the new light pattern comprises multiplying the preliminary luminous intensity of each light source by the intensity operation coefficient.

11. Method according to claim 10, wherein

    o the lighting conditions are at least two of active lighting functionality, the route profile, outside luminous intensity, numbers of cars around and distance with respect to them, current vehicle speed, lighting device temperature, presence of traffic lights, external temperature, location inside a tunnel; and/or
    o the plurality of sensors comprise at least three of a vehicle speed sensor, an ambient temperature sensor, an ambient humidity sensor, an external light sensor, an air speed sensor, a thermistor, a lighting functionality activation sensor, a light source temperature, radar, lidar or infrared sensors, geopositioning sensors or cameras and/or
    o the device data further comprises physical data of the automotive lighting device, such as the volume of the lighting device or a distance between two points of the lighting device.

12. Method according to any of claims 10 or 11, wherein the weights of each lighting condition is provided by predetermined operation modes.

13. Data processing element comprising means for carrying out the steps of a method according to any of the preceding claims.

14. Computer program comprising instructions which, when the program is executed by a control unit, cause the control unit to carry out the steps of a method according to any of claims 1 to 12.

15. Automotive lighting device comprising:

> ο a matrix arrangement of solid-state light sources (2);
> ο a plurality of sensors (4) configured to provide some external data; and
> ο a control unit (3) for performing the steps of the method according to any claims 1 to 12.

16. Automotive lighting device (1) according to claim 15, wherein the matrix arrangement comprises at least 2000 solid-state light sources (2).

[Fig. 1]

[Fig. 2a]

[Fig. 2b]

6

1

100

Europäisches
Patentamt

European
Patent Office

Office européen
des brevets

# EUROPEAN SEARCH REPORT

Application Number

EP 21 18 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/084848 A1 (BONNE RONALD [US] ET AL) 12 March 2020 (2020-03-12)<br>* paragraph [0002] *<br>* paragraph [0004] *<br>* paragraph [0007] *<br>* paragraph [0016] *<br>* paragraph [0020] - paragraph [0024] *<br>* paragraph [0029] - paragraph [0032] *<br>* figures 3a, 3b *<br>----- | 1,13-16 | INV.<br>G06K9/00 |
| X | EP 3 267 098 A1 (LG ELECTRONICS INC [KR]) 10 January 2018 (2018-01-10)<br>* paragraph [0002] - paragraph [0004] *<br>* paragraph [0011] *<br>* paragraph [0035] *<br>* paragraph [0052] - paragraph [0055] *<br>* paragraph [0063] *<br>* paragraph [0159] - paragraph [0165] *<br>* paragraph [0169] *<br>* paragraph [0173] - paragraph [0177] *<br>* paragraph [0029] *<br>----- | 1-6,<br>13-15 | |
| X | EP 1 599 905 A2 (GENTEX CORP [US]) 30 November 2005 (2005-11-30)<br>* paragraph [0002] - paragraph [0004] *<br>* paragraph [0007] - paragraph [0011] *<br>* paragraph [0018] - paragraph [0019] *<br>* paragraph [0022] *<br>* paragraph [0066] *<br>* paragraph [0069] *<br>* paragraph [0092] - paragraph [0093] *<br>-----<br>-/-- | 1-16 | **TECHNICAL FIELDS SEARCHED (IPC)**<br><br>G06K |

The present search report has been drawn up for all claims

| Place of search | Date of completion of the search | Examiner |
|---|---|---|
| The Hague | 1 December 2021 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 18 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/087352 A1 (SZ DJI TECHNOLOGY CO LTD [CN]) 7 May 2020 (2020-05-07)<br>* paragraph [0006] - paragraph [0007] *<br>* paragraph [0020] - paragraph [0024] *<br>* paragraph [0032] *<br>* paragraph [0036] *<br>* paragraph [0038] - paragraph [0040] *<br>* paragraph [0051] *<br>----- | 1-16 | |
| X | EP 2 420 408 A1 (GENTEX CORP [US]) 22 February 2012 (2012-02-22)<br>* paragraph [0001] *<br>* paragraph [0003] *<br>* paragraph [0005] *<br>* paragraph [0012] - paragraph [0015] *<br>* paragraph [0026] *<br>* paragraph [0036] *<br>* paragraph [0043] *<br>* paragraph [0095] *<br>* paragraph [0120] *<br>* paragraph [0123] *<br>* paragraph [0147] *<br>* paragraph [0157] *<br>----- | 1-16 | |
| X | US 2004/143380 A1 (STAM JOSEPH S [US] ET AL) 22 July 2004 (2004-07-22)<br>* paragraph [0004] *<br>* paragraph [0092] *<br>* paragraph [0096] *<br>* paragraph [0101] *<br>----- | 1-16 | TECHNICAL FIELDS SEARCHED (IPC) |

The present search report has been drawn up for all claims

| Place of search | Date of completion of the search | Examiner |
|---|---|---|
| The Hague | 1 December 2021 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 944 140 A1**

## ANNEX TO THE EUROPEAN SEARCH REPORT
## ON EUROPEAN PATENT APPLICATION NO.

EP 21 18 6829

01-12-2021

| Patent document cited in search report | | Publication date | Patent family member(s) | | Publication date |
|---|---|---|---|---|---|
| US 2020084848 | A1 | 12-03-2020 | CN | 113056782 A | 29-06-2021 |
| | | | EP | 3850610 A1 | 21-07-2021 |
| | | | KR | 20210072772 A | 17-06-2021 |
| | | | TW | 202019238 A | 16-05-2020 |
| | | | US | 2020082503 A1 | 12-03-2020 |
| | | | US | 2020084848 A1 | 12-03-2020 |
| | | | WO | 2020053717 A1 | 19-03-2020 |
| EP 3267098 | A1 | 10-01-2018 | CN | 107585089 A | 16-01-2018 |
| | | | EP | 3267098 A1 | 10-01-2018 |
| | | | KR | 20180005515 A | 16-01-2018 |
| | | | US | 2018031200 A1 | 01-02-2018 |
| EP 1599905 | A2 | 30-11-2005 | CA | 2513683 A1 | 10-09-2004 |
| | | | EP | 1599905 A2 | 30-11-2005 |
| | | | JP | 2006518308 A | 10-08-2006 |
| | | | KR | 20050113608 A | 02-12-2005 |
| | | | MX | PA05008703 A | 05-10-2005 |
| | | | US | 2004201483 A1 | 14-10-2004 |
| | | | WO | 2004076231 A2 | 10-09-2004 |
| WO 2020087352 | A1 | 07-05-2020 | CN | 111212756 A | 29-05-2020 |
| | | | EP | 3684646 A1 | 29-07-2020 |
| | | | US | 2021046862 A1 | 18-02-2021 |
| | | | WO | 2020087352 A1 | 07-05-2020 |
| EP 2420408 | A1 | 22-02-2012 | AT | 533665 T | 15-12-2011 |
| | | | AU | 4761101 A | 03-10-2001 |
| | | | AU | 2001247611 B2 | 02-12-2004 |
| | | | CA | 2402406 A1 | 27-09-2001 |
| | | | EP | 1282916 A2 | 12-02-2003 |
| | | | EP | 2420408 A1 | 22-02-2012 |
| | | | JP | 4034565 B2 | 16-01-2008 |
| | | | JP | 2004500279 A | 08-01-2004 |
| | | | JP | 2007045407 A | 22-02-2007 |
| | | | KR | 20030047879 A | 18-06-2003 |
| | | | KR | 20060028735 A | 31-03-2006 |
| | | | KR | 20060107466 A | 13-10-2006 |
| | | | MX | PA02009052 A | 09-09-2004 |
| | | | US | 6587573 B1 | 01-07-2003 |
| | | | US | 2003123705 A1 | 03-07-2003 |
| | | | US | 2003123706 A1 | 03-07-2003 |
| | | | US | 2006018511 A1 | 26-01-2006 |
| | | | US | 2008129206 A1 | 05-06-2008 |
| | | | WO | 0170538 A2 | 27-09-2001 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**                    EP 21 18 6829

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2021

| Patent document cited in search report | Publication date | Patent family member(s) | | Publication date |
|---|---|---|---|---|
| US 2004143380 A1 | 22-07-2004 | AU | 2003298558 A1 | 04-05-2004 |
| | | CA | 2494723 A1 | 22-04-2004 |
| | | CN | 101023407 A | 22-08-2007 |
| | | EP | 1573479 A2 | 14-09-2005 |
| | | JP | 4818609 B2 | 16-11-2011 |
| | | JP | 2006511383 A | 06-04-2006 |
| | | KR | 20050037582 A | 22-04-2005 |
| | | MX | PA05001880 A | 03-06-2005 |
| | | US | 2004143380 A1 | 22-07-2004 |
| | | WO | 2004034183 A2 | 22-04-2004 |

EPO FORM P0459

For more details about this annex : see Official Journal of the European Patent Office, No. 12/82

page 2 of 2